# FASCICULE DE BREVET EUROPEEN

(11) **EP 3 721 058 B1**
(45) Date de publication et mention de la délivrance du brevet: **23.03.2022**
(21) Numéro de dépôt: 18819011.0
(22) Date de dépôt: 03.12.2018
(51) Int. Cl.: F01D 5/28, F01D 9/04, F01D 25/24

(54) **LIAISON ENTRE UN SECTEUR DE DISTRIBUTEUR EN COMPOSITE A MATRICE CERAMIQUE ET UN SUPPORT METALLIQUE D'UNE TURBINE DE TURBOMACHINE**
VERBINDUNG ZWISCHEN EINEM LEITKRANZSEKTOR AUS VERBUNDWERKSTOFF MIT KERAMISCHER MATRIX UND EINEM METALLISCHEN TRÄGER EINER TURBINE EINER TURBOMASCHINE
CONNECTION BETWEEN A GUIDE VANE SECTOR MADE OF CMC MATERIAL AND A METALLIC SUPPORT OF A TURBINE OF A TURBOMACHINE

(30) Priorité: 05.12.2017 FR 1761680
(43) Date de publication de la demande: 14.10.2020
(73) Titulaire: Safran Aircraft Engines, 75015 Paris (FR); Safran Helicopter Engines, 64510 Bordes (FR)
(72) Inventeur: TABLEAU, Nicolas, Paul, 77550 Moissy-Cramayel (FR); CONGRATEL, Sébastien, Serge, Francis, 77550 Moissy-Cramayel (FR); QUENNEHEN, Lucien, Henri, Jacques, 77550 Moissy-Cramayel (FR); LEPRETRE, Gilles, Gérard, Claude, 77550 Moissy-Cramayel (FR); BOISSELEAU, Denis, Daniel, Jean, 77550 Moissy-Cramayel (FR)
(74) Mandataire: Gevers & Orès
(86) Numéro de dépôt international: PCT/EP2018/083378
(87) Numéro de publication internationale: WO 2019/110526

(56) Documents cités:
- EP-A1- 3 124 750
- FR-A1- 3 040 734
- US-A1- 2016 169 033

## Description

### DOMAINE TECHNIQUE

La présente invention concerne le domaine des turbomachines telles qu'un turboréacteur ou un turbopropulseur d'avion, et plus particulièrement une liaison entre un distributeur en composite à matrice céramique et un support métallique de distributeur d'une turbine d'une telle turbomachine.

### ETAT DE L'ART

Il est connu des documents FR-A1-2961850, FR-A1-2887920 ou FR-A1-2913051 au nom de la demanderesse, une turbine de turbomachine comprenant au moins un étage comportant un distributeur annulaire sectorisé présentant une rangée d'aubes fixes de redressement et une roue de rotor (également appelée roue à aubes) mobile en rotation, la roue de rotor étant montée en aval du distributeur par rapport au sens de circulation des gaz d'échappement dans la turbine.

Plus précisément, le distributeur comprend deux plates-formes annulaires coaxiales, respectivement interne et externe, entre lesquelles s'étendent les aubes fixes de redressement. La plate-forme externe et la plate-forme interne définissent entre elles une portion d'une veine traversée par les gaz d'échappement.

De manière générale, la plate-forme externe du distributeur comprend des moyens d'accrochage qui coopèrent avec des moyens de réception d'un support annulaire sectorisé bridé à un carter externe fixe de turbine, le support étant alors placé radialement entre le distributeur et le carter de turbine.

Selon une technique connue, les moyens d'accrochage comprennent un rebord circulaire amont et un rebord circulaire aval s'étendant axialement, les rebords amont et aval étant respectivement configurés pour coopérer avec un crochet amont et un crochet aval du support. Le rebord et le crochet correspondant sont maintenus l'un par rapport à l'autre via des moyens de verrouillage. Afin de garantir la liaison entre le distributeur et le support dans le temps, et autrement dit éviter que les rebords se désunissent des crochets sous l'action des sollicitations extérieures (forces aérodynamiques des gaz d'échappement, dilatation thermique...), les rebords et les crochets sont montés avec une précontrainte (ou précharge) via les moyens de verrouillage.

Dans le cas où les matériaux du distributeur et du support sont différents, à savoir par exemple un distributeur en composite à matrice céramique (CMC) et un support métallique, la précontrainte à appliquer est importante du fait notamment de l'apparition d'efforts importants localisés au niveau des interfaces entre les rebords et les crochets lorsque la turbomachine est en fonctionnement, ces efforts résultant notamment du comportement différent des matériaux face aux sollicitations thermiques.

L'utilisation du composite à matrice céramique permet bien évidemment de minimiser la masse de la turbine, et de manière plus générale de la turbomachine.

On note également qu'un distributeur en composite à matrice céramique résiste à des températures plus élevées qu'un distributeur métallique. Ainsi, des distributeurs en composite à matrice céramique offrent la possibilité d'avoir des températures plus importantes des gaz d'échappement dans la veine et nécessitent moins d'air de refroidissement, au bénéfice du rendement de la turbomachine. Le document US 2016/169033 A1 divulgue un exemple d'une fixation mécanique entre une aube de redresseur en composite à matrice céramique et un support métallique.

Toutefois, un distributeur en composite à matrice céramique présente une résistance mécanique plus faible qu'un distributeur métallique. La caractéristique mécanique précitée rend incompatible l'application d'une importante précontrainte au montage sous peine notamment d'avoir une usure prématurée des rebords au niveau des zones en contact avec les moyens de verrouillage.

L'objectif de la présente invention est donc de proposer une liaison entre un distributeur en composite à matrice céramique et un support métallique de distributeur, cette liaison permettant de remédier aux difficultés rencontrées précitées.

### EXPOSE DE L'INVENTION

L'invention propose à cet effet un secteur de distributeur annulaire sectorisé en composite à matrice céramique pour une turbine de turbomachine, ledit secteur de distributeur comprenant une plate-forme externe et une plate-forme interne coaxiale avec ladite plate-forme externe, ladite plate-forme externe étant reliée à ladite plate-forme interne via au moins une aube fixe de redressement s'étendant suivant une direction radiale, ladite plate-forme externe comprenant des moyens d'accrochage à un secteur d'un support annulaire sectorisé métallique, les moyens d'accrochage comprenant au moins un rebord central et deux rebords latéraux situés circonférentiellement de part et d'autre du rebord central, les rebords s'étendant suivant une direction axiale perpendiculaire à la direction radiale, ledit rebord central étant décalé radialement par rapport auxdits rebords latéraux suivant une ligne directrice coïncidente avec une face de chacun desdits rebords de sorte que le rebord central soit radialement d'un côté de ladite ligne directrice et les rebords latéraux de l'autre, ledit rebord central étant configuré pour coopérer avec un crochet central dudit secteur de support de sorte que ledit rebord central et ledit crochet central soient en appui radial l'un sur l'autre et situés radialement de part et d'autre de ladite ligne directrice, chaque rebord latéral étant configuré pour coopérer avec un crochet latéral dudit secteur de support de sorte que ledit rebord latéral et ledit crochet latéral correspondant soient en appui radial l'un sur l'autre et situés radialement de part et d'autre de ladite ligne directrice.

En comparaison à l'art antérieur présenté ci-dessus, une telle liaison ne nécessite pas d'organe de verrouillage et de montage avec une importante précontrainte. En fonctionnement, les sollicitations extérieures (forces aérodynamiques des gaz d'échappement, dilatation thermique, ...) sont reprises de façon homogène par l'ensemble des rebords de chacun des secteurs formant le distributeur, de manière à répartir les efforts extérieurs au niveau des rebords sans générer de concentrations de contrainte, au bénéfice de la durée de vie des moyens d'accrochage et de manière plus générale de la liaison entre les secteurs de distributeur et les secteurs de support associés.

En outre, une telle liaison permet de simplifier considérablement le montage de chaque secteur de turbine, au bénéfice de la productivité.

Le secteur de distributeur selon l'invention peut comprendre une ou plusieurs des caractéristiques suivantes, prises isolément les unes des autres ou en combinaison les unes avec les autres :
- chaque rebord latéral est décalé circonférentiellement dudit rebord central d'une distance prédéterminée qui est de préférence inférieure à 0.5 mm ;
- la ligne directrice est rectiligne ou curviligne ;
- chacun desdits rebords a une section rectangulaire.

L'invention a pour deuxième objet un secteur de support annulaire sectorisé de distributeur d'une turbine de turbomachine, ledit secteur de support étant métallique et comprenant une enveloppe externe comportant des moyens de réception d'un secteur en composite à matrice céramique d'un distributeur tel que décrit précédemment, caractérisé en ce que les moyens de réception comprennent au moins un crochet central et deux crochets latéraux situés circonférentiellement de part et d'autre du crochet central, les crochets s'étendant suivant une direction axiale, ledit crochet central étant décalé radialement par rapport auxdits crochets latéraux suivant une ligne directrice coïncidente avec une face de chacun desdits crochets de sorte que le crochet central soit radialement d'un côté de ladite ligne directrice et les crochets latéraux de l'autre, ledit crochet central étant configuré pour coopérer avec un rebord central dudit secteur de distributeur de sorte que ledit crochet central et ledit rebord central soient en appui radial l'un sur l'autre et situés radialement de part et d'autre de ladite ligne directrice, chaque crochet latéral étant configuré pour coopérer avec un rebord latéral dudit secteur de distributeur de sorte que ledit crochet latéral et ledit rebord latéral correspondant soient en appui radial l'un sur l'autre et situés radialement de part et d'autre de ladite ligne directrice.

En comparaison à l'art antérieur présenté ci-dessus, une telle liaison ne nécessite pas d'organe de verrouillage et de montage avec une importante précontrainte. En fonctionnement, les sollicitations extérieures (forces aérodynamiques des gaz d'échappement, dilatation thermique) sont reprises de façon homogène par l'ensemble des crochets de chacun des secteurs formant le support, de manière à répartir les efforts extérieurs au niveau des crochets sans générer de concentrations de contrainte, au bénéfice de la durée de vie des moyens de réception et de manière plus générale de la liaison entre les secteurs de distributeur et les secteur de support associés.

Le secteur de support selon l'invention peut comprendre une ou plusieurs des caractéristiques suivantes, prises isolément les unes des autres ou en combinaison les unes avec les autres :
- chaque crochet latéral est décalé circonférentiellement dudit crochet central d'une distance prédéterminée qui est de préférence inférieure à 0.5 mm ;
- la ligne directrice est rectiligne ou curviligne ;
- chacun desdits crochets a une section rectangulaire.

L'invention a pour troisième objet un distributeur annulaire sectorisé d'une turbine de turbomachine comprenant une pluralité de secteurs de distributeur tels que précédemment décrits, lesdits secteurs de distributeur étant disposés circonférentiellement bout à bout.

L'invention a pour quatrième objet un support annulaire sectorisé de distributeur d'une turbine de turbomachine comprenant une pluralité de secteurs de support tels que précédemment décrits, lesdits secteurs de support étant disposés circonférentiellement bout à bout.

L'invention a pour cinquième objet un ensemble d'une turbine de turbomachine comprenant un secteur de distributeur tel que précédemment décrit et un secteur de support tel que précédemment décrit, le rebord central coopérant avec le crochet central, le rebord central et le crochet central étant en appui radial l'un sur l'autre et situés radialement de part et d'autre d'une ligne directrice commune, chaque rebord latéral coopérant avec un crochet latéral correspondant, le rebord latéral et le crochet latéral correspondant étant en appui radial l'un sur l'autre et situés radialement de part et d'autre de la ligne directrice commune.

L'invention a pour sixième objet une turbine de turbomachine comprenant un ensemble tel que précédemment décrit.

L'invention a pour septième objet une turbomachine comprenant une turbine telle que précédemment décrite.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue en coupe longitudinale d'une turbine d'une turbomachine ;
- la figure 2 est une vue en perspective des moyens d'accrochage d'un secteur de distributeur et des moyens de réception d'un secteur de support, dans une position démontée ;
- la figure 3 est une vue en perspective des moyens d'accrochage du secteur de distributeur et des moyens de réception du secteur de support, dans une position montée ;
- la figure 4 est une vue en section des moyens d'accrochage et des moyens de réception suivant un plan radial passant par les moyens d'accrochage et les moyens de réception, lorsque la turbine est froide ;
- la figure 5 est une vue en section des moyens d'accrochage et des moyens de réception suivant un plan radial passant par les moyens d'accrochage et les moyens de réception, lorsque la turbine est chaude.

### DESCRIPTION DETAILLEE

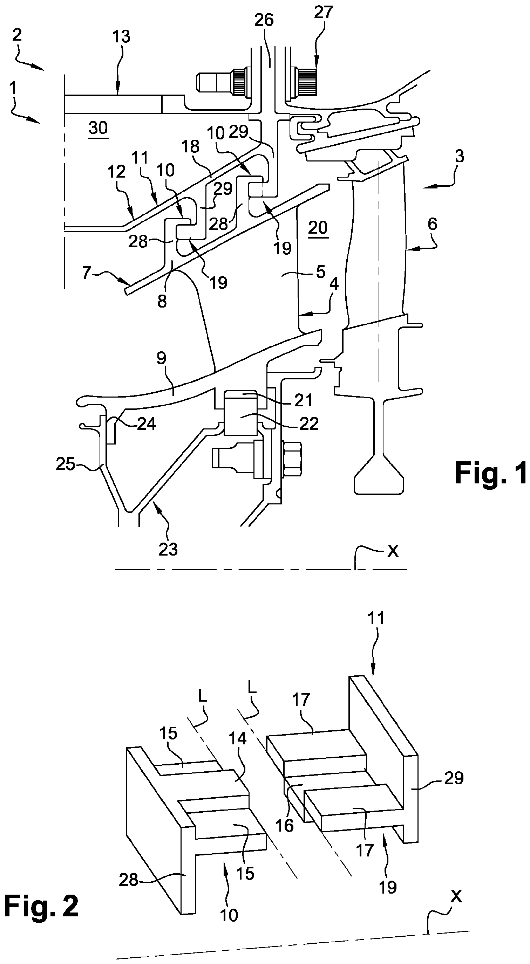

Sur la figure 1 est représentée une partie d'une turbine 1 d'une turbomachine 2 telle qu'un turboréacteur ou un turbopropulseur d'aéronef, cette turbine 1 étant disposée en aval d'une chambre de combustion par rapport au sens de circulation des gaz dans la turbomachine 2.

La turbine 1 comprend une turbine amont communément appelée « turbine haute pression » (non représentée) et une turbine aval partiellement représentée communément appelée « turbine basse pression » comportant plusieurs étages basse pression, seul un étage basse pression 3 étant représenté sur la figure 1.

Plus précisément, l'étage basse pression 3 comprend un distributeur annulaire sectorisé basse pression 4 présentant une rangée d'aubes fixes de redressement 5 et une roue de rotor basse pression 6 mobile en rotation autour d'un axe X, la roue de rotor basse pression 6 étant montée en aval du distributeur basse pression 4.

Par convention dans la présente demande, on entend par « axial » ou « axialement » toute direction parallèle à l'axe X, et par « radial » ou « radialement » toute direction perpendiculaire à l'axe X. De même, par convention dans la présente demande, les termes « interne », « externe », « intérieur » ou « extérieur » sont définis radialement par rapport à l'axe X. Enfin, les termes « amont » et « aval » sont définis par rapport au sens de circulation des gaz dans la turbomachine 2.

Le distributeur basse pression 4 de la turbine 1 comprend une pluralité de secteurs 7 de distributeur 4 en composite à matrice céramique (CMC) disposés circonférentiellement bout à bout autour de l'axe X.

On note qu'un composite à matrice céramique (CMC) est un matériau comprenant une matrice céramique et des fibres céramiques. La matrice est par exemple réalisée en carbone ou en carbure de silicium. La matrice est par exemple déposée sur une préforme de fibres céramiques via un dépôt chimique en phase vapeur (DCV) plus connu sous l'acronyme anglais « CVD » pour « Chemical Vapor Deposition ».

Chaque secteur 7 de distributeur basse pression 4 comprend une plate-forme externe 8 et une plate-forme interne 9 coaxiale avec la plate-forme externe 8, ces dernières étant centrées sur l'axe X. La plate-forme externe 8 est reliée à la plate-forme interne 9 via au moins une aube fixe de redressement 5 s'étendant suivant la direction radiale (par exemple trois). La plate-forme externe 8 comprend en outre des moyens d'accrochage 10 à un secteur 11 d'un support 12 annulaire sectorisé métallique bridé à un carter externe 13 fixe de turbine.

Les moyens d'accrochage 10 comprennent au moins un rebord central 14 et deux rebords latéraux 15 situés circonférentiellement de part et d'autre du rebord central 14. Les rebords 14, 15 s'étendent suivant la direction axiale perpendiculaire à la direction radiale. Le rebord central 14 est décalé radialement par rapport aux rebords latéraux 15 suivant une ligne directrice L coïncidente avec une face de chacun des rebords 14, 15 de sorte que le rebord central 14 soit radialement d'un côté de la ligne directrice L et les rebords latéraux 15 de l'autre.

Le rebord central 14 est configuré pour coopérer avec un crochet central 16 du secteur 11 de support correspondant 12 de sorte que le rebord central 14 et le crochet central 16 soient en appui radial l'un sur l'autre et situés radialement de part et d'autre de la ligne directrice L. Chaque rebord latéral 15 est configuré pour coopérer avec un crochet latéral 17 du secteur 11 de support correspondant 12 de sorte que le rebord latéral 15 et le crochet latéral 17 correspondant soient en appui radial l'un sur l'autre et situés radialement de part et d'autre de la ligne directrice L.

Le support 12 du distributeur basse pression 4 comprend une pluralité de secteurs 11 de support 12 métalliques disposés circonférentiellement bout à bout autour de l'axe X.

Chaque secteur 11 de support 12 du distributeur basse pression 4 comprend une enveloppe externe 18 centrée sur l'axe X comportant des moyens de réception 19 d'un secteur 7 de distributeur correspondant 4.

Les moyens de réception 19 comprennent au moins un crochet central 16 et deux crochets latéraux 17 situés circonférentiellement de part et d'autre du crochet central 16. Les crochets 16, 17 s'étendent suivant la direction axiale. Le crochet central 16 est décalé radialement par rapport aux crochet latéraux 17 suivant une ligne directrice L coïncidente avec une face de chacun des crochets 16, 17 de sorte que le crochet central 16 soit radialement d'un côté de la ligne directrice L et les crochets latéraux 17 de l'autre.

Le crochet central 16 est configuré pour coopérer avec un rebord central 14 du secteur 7 de distributeur correspondant 4 de sorte que le crochet central 16 et le rebord central 14 soient en appui radial l'un sur l'autre et situés radialement de part et d'autre de la ligne directrice L. Chaque crochet latéral 17 est configuré pour coopérer avec un rebord latéral 15 du secteur 7 de distributeur correspondant 4 de sorte que le crochet latéral 17 et le rebord latéral 15 correspondant soient en appui radial l'un sur l'autre et situés radialement de part et d'autre de la ligne directrice L.

L'exemple illustré sur la figure 1 n'est en rien limitatif, le distributeur basse pression 4 présenté ci-dessus pourrait être un distributeur haute pression.

La plate-forme interne 9 et la plate-forme externe 8 définissent entre elles une portion d'une veine 20 annulaire traversée par le flux de gaz.

Selon le mode de réalisation illustré sur la figure 1, la plate-forme externe 8 est tronconique et s'évase de l'amont vers l'aval. La plate-forme interne 9 est également sensiblement tronconique et s'évase de l'amont vers l'aval. La plate-forme interne 9 comprend en outre une rainure interne 21 coïncidant avec une bague de guidage 22 solidaire d'un carter interne 23 fixe de turbine et un épaulement radial 24 amont en butée axiale avec une cloison 25 radiale amont du carter interne 23 de turbine.

Selon le mode de réalisation illustré sur la figure 1, l'enveloppe externe 18 est tronconique et s'évase de l'amont vers l'aval. L'enveloppe externe 18 comprend une bride externe 26 solidarisée via des boulons 27 entre deux tronçons du carter externe 13 de turbine.

Selon le mode de réalisation illustré sur la figure 1, la plate-forme externe 8 du secteur 7 de distributeur basse pression 4 comprend des moyens d'accrochage 10 amont et des moyens d'accrochage 10 aval décalés axialement. Les moyens d'accrochage 10 amont et aval du secteur 7 de distributeur basse pression 4 sont configurés pour respectivement coopérer avec des moyens de réception 19 amont et aval du secteur 11 de support 12 de distributeur correspondant 4. Les moyens d'accrochage 10 amont et aval sont placés à l'extrémité radialement externe d'une collerette 28 circulaire amont et d'une collerette 28 circulaire aval s'étendant radialement vers l'extérieur à partir de la plate-forme externe 8. Les moyens de réception 19 amont et aval sont placés à l'extrémité radialement interne d'une paroi 29 circulaire amont et d'une paroi 29 circulaire aval s'étendant radialement vers l'intérieur à partir de l'enveloppe externe 18.

La ligne directrice L commune aux moyens d'accrochage 10 et aux moyens de réception 19 est dans le cas présent rectiligne L mais elle pourrait être curviligne, et par exemple circulaire.

Lorsque la turbomachine est en fonctionnement, le maintien d'une ligne directrice rectiligne ou curviligne peut être réalisé au moyen de diffuseurs d'air de refroidissement configurés pour maintenir une répartition de température uniforme le long de la ligne directrice.

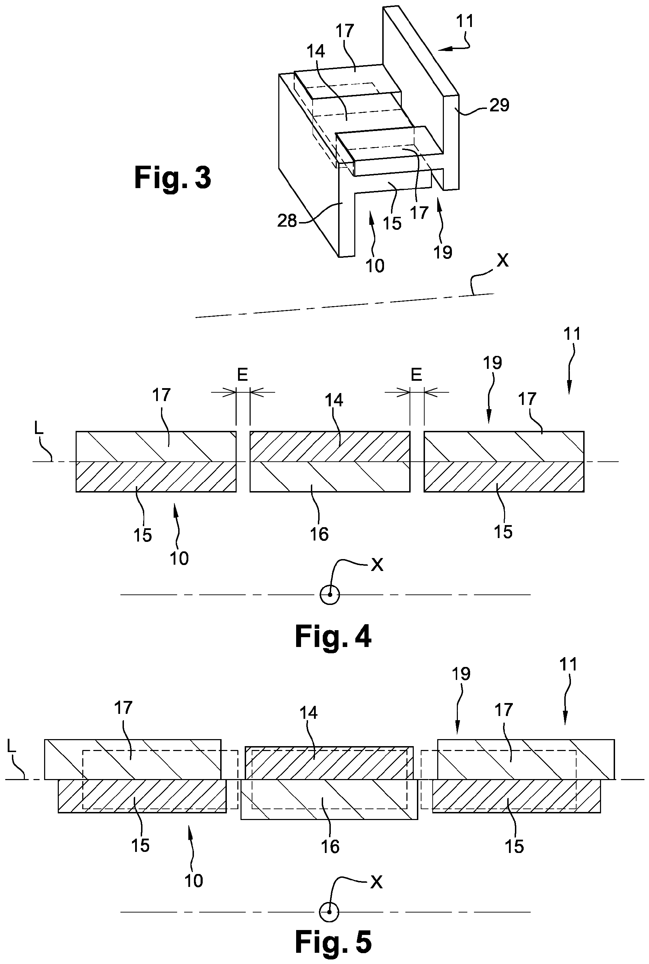

Tel qu'illustré sur les figures 2 et 3, les moyens d'accrochage 10 comprennent un rebord central 14 externe et deux rebords latéraux 15 internes, et autrement dit le rebord central 14 est placé selon la direction radiale à l'extérieur de la ligne directrice L et les rebords latéraux 15 à l'intérieur de la ligne directrice L. La face interne du rebord central 14 est coïncidente avec la ligne directrice L. La face externe de chaque rebord latéral 15 est coïncidente avec la ligne directrice L. Les rebords 14, 15 ont une section rectangulaire et s'étendent axialement vers l'aval. Les rebords 14, 15 présentent dans le cas présent des caractéristiques dimensionnelles égales mais elles pourraient varier.

Les moyens d'accrochage 10 amont et aval sont respectivement venus de matière avec les collerettes 28 amont et aval mais ils pourraient être rapportés via des moyens de fixation tels que des boulons.

Tel qu'illustré sur la figure 4, chaque rebord latéral 15 est décalé circonférentiellement du rebord central 14 d'une distance E prédéterminée. Ces distances E permettent de définir des jeux nécessaires pour éviter tout contact entre les rebords 14, 15, lorsque la turbomachine 2 est en fonctionnement. La distance E peut varier de 0 mm jusqu'à près de 0.5 mm.

Tel qu'illustré sur les figures 2 et 3, les moyens de réception 19 comprennent un crochet central 16 interne et deux crochets latéraux 17 externes, et autrement dit le crochet central 16 est placé selon la direction radiale à l'intérieur de la ligne directrice L et les crochets latéraux 17 à l'extérieur de la ligne directrice L. La face externe du crochet central 16 est coïncidente avec la ligne directrice L. La face interne de chaque crochet latéral 17 est coïncidente avec la ligne directrice L. Les crochets 16, 17 ont une section rectangulaire et s'étendent axialement vers l'amont. Les crochets 16, 17 présentent dans le cas présent des caractéristiques dimensionnelles analogues mais elles pourraient varier. Ces caractéristiques dimensionnelles sont également analogues à celles des rebords 14, 15.

Les moyens de réception 19 amont et aval sont respectivement venus de matière avec les parois 29 amont et aval mais ils pourraient être rapportés via des moyens de fixation tels que des boulons.

Tel qu'illustré sur la figure 4, de la même manière que les rebords 14, 15, chaque crochet latéral 17 est décalé circonférentiellement du crochet central 16 par une distance E prédéterminée. Ces distances E permettent de définir des jeux nécessaires pour éviter tout contact entre les crochets 16, 17, lorsque la turbomachine 2 est en fonctionnement. La distance E peut varier de 0 mm jusqu'à près de 0.5 mm.

Lorsque d'une part les moyens d'accrochage 10 amont sont en regard des moyens de réception 19 amont et d'autre part les moyens d'accrochage 10 aval sont en regard des moyens de réception 19 aval (figure 2), le secteur 7 de distributeur 4 est enfin déplacé axialement de l'amont vers l'aval sur le secteur 11 de support correspondant 12.

A la suite du montage, en position montée (figure 3), la face interne du rebord central 14 est en appui radial avec la face externe du crochet central 16, le rebord central 14 étant à l'extérieur de la ligne directrice L et le crochet central 16 étant à l'intérieur de la ligne directrice L. En outre, la face externe de chaque rebord latéral 15 est en appui radial avec la face interne du crochet latéral 17 correspondant, chaque rebord latéral 15 étant à l'intérieur de la ligne directrice L et chaque crochet latéral 17 étant à l'extérieur de la ligne directrice L. L'extrémité amont des crochets 16, 17 est en butée axiale contre les collerettes 28 (figure 3).

Lors du montage, chaque rebord 14, 15 est montée en appui radial avec le crochet 16, 17 correspondant avec un jeu radial négatif prédéterminé de manière à assurer un maintien axial du rebord 14, 15 par rapport au crochet correspondant 16, 17 via des forces de friction (forces axiales), à l'issue du montage. Pour obtenir avec précision le jeu radial négatif souhaité, chaque rebord 14, 15 est appairé au crochet correspondant 16, 17.

La figure 5 illustre de façon superposée, en traits continus, la liaison entre les moyens d'accrochage 10 et les moyens de réception 19 à chaud (et autrement dit lorsque ces derniers sont soumis aux gaz chaud d'échappement), et en traits pointillés, la liaison entre les moyens d'accrochage et les moyens de réception 19 à froid (par exemple à l'issue du montage).

Grâce à un refroidissement uniforme le long de la ligne directrice L commune au moyen de diffuseurs et grâce aux géométries de coopération des moyens d'accrochage et de réception, la ligne directrice L reste sensiblement constante malgré les sollicitations extérieures (forces aérodynamiques des gaz d'échappement, dilatation thermique...), ce qui signifie notamment que les rebords 14, 15 reprennent de façon homogène les sollicitations extérieures sans générer de concentrations de contrainte lors des différentes phases de fonctionnement de la turbine.

On note également que les rebords 14, 15 (respectivement les crochets 16, 17) ne rentrent pas en contact les uns avec les autres lorsque ces derniers se déforment sous l'action des sollicitations extérieures.

Tel qu'illustré sur la figure 1, la turbine 1 comprend une enceinte 30 annulaire d'axe X de refroidissement des enveloppes 18 et plates-formes externes 8. L'enceinte 30 est délimitée intérieurement par les enveloppes 18 et extérieurement par le carter externe 13 de turbine. L'air de refroidissement et de ventilation provient par exemple de compresseurs placés en amont de la chambre de combustion par rapport au sens de circulation des gaz dans la turbomachine 2.

Le distributeur basse pression 4 comprend des moyens d'étanchéité (non représentés) placés entre deux secteurs 7 de distributeur 4 aboutés au niveau des plates-formes internes et externes 8, 9. Ces moyens d'étanchéité permettent de limiter notamment les fuites de gaz radiales depuis la veine 20 vers l'enceinte 30, et inversement, au bénéfice du rendement de la turbine 1.

## Revendications

1. Secteur (7) de distributeur (4) annulaire sectorisé en composite à matrice céramique pour une turbine (1) de turbomachine (2), ledit secteur (7) de distributeur (4) comprenant une plate-forme externe (8) et une plate-forme interne (9) coaxiale avec ladite plate-forme externe (8), ladite plate-forme externe (8) étant reliée à ladite plate-forme interne (9) via au moins une aube fixe de redressement (5) s'étendant suivant une direction radiale, ladite plate-forme externe (8) comprenant des moyens d'accrochage (10) à un secteur (11) d'un support (12) annulaire sectorisé métallique, **caractérisé en ce que** les moyens d'accrochage (10) comprennent au moins un rebord central (14) et deux rebords latéraux (15) situés circonférentiellement de part et d'autre du rebord central (14), les rebords (14, 15) s'étendant suivant une direction axiale perpendiculaire à la direction radiale, ledit rebord central (14) étant décalé radialement par rapport auxdits rebords latéraux (15) suivant une ligne directrice (L) coïncidente avec une face de chacun desdits rebords (14, 15) de sorte que le rebord central (14) soit radialement d'un côté de ladite ligne directrice (L) et les rebords latéraux (15) de l'autre, ledit rebord central (14) étant configuré pour coopérer avec un crochet central (16) dudit secteur (11) de support (12) de sorte que ledit rebord central (14) et ledit crochet central (16) soient en appui radial l'un sur l'autre et situés radialement de part et d'autre de ladite ligne directrice (L), chaque rebord latéral (15) étant configuré pour coopérer avec un crochet latéral (17) dudit secteur (11) de support (12) de sorte que ledit rebord latéral (15) et ledit crochet latéral (17) correspondant soient en appui radial l'un sur l'autre et situés radialement de part et d'autre de ladite ligne directrice (L).

2. Secteur (7) de distributeur (4) selon la revendication 1, **caractérisé en ce que** chaque rebord latéral (15) est décalé circonférentiellement dudit rebord central (14) d'une distance (E) prédéterminée qui est de préférence inférieure à 0.5 mm.

3. Secteur (7) de distributeur (4) selon l'une des revendications précédentes, **caractérisé en ce que** la ligne directrice (L) est rectiligne ou curviligne.

4. Secteur (7) de distributeur (4) selon l'une des revendications précédentes **caractérisé en ce que** chacun desdits rebords (14, 15) a une section rectangulaire.

5. Secteur (11) de support (12) annulaire sectorisé de distributeur (4) d'une turbine (1) de turbomachine (2), ledit secteur (11) de support (12) étant métallique et comprenant une enveloppe externe (18) comportant des moyens de réception (19) d'un secteur (7) en composite à matrice céramique d'un distributeur (4) selon l'une des revendications 1 à 4, **caractérisé en ce que** les moyens de réception (19) comprennent au moins un crochet central (16) et deux crochets latéraux (17) situés circonférentiellement de part et d'autre du crochet central (16), les crochets (16, 17) s'étendant suivant une direction axiale, ledit crochet central (16) étant décalé radialement par rapport auxdits crochets latéraux (17) suivant une ligne directrice (L) coïncidente avec une face de chacun desdits crochets (16, 17) de sorte que le crochet central (16) soit radialement d'un côté de ladite ligne directrice (L) et les crochets latéraux (17) de l'autre, ledit crochet central (16) étant configuré pour coopérer avec un rebord central (14) dudit secteur (7) de distributeur (4) de sorte que ledit crochet central (16) et ledit rebord central (14) soient en appui radial l'un sur l'autre et situés radialement de part et d'autre de ladite ligne directrice (L), chaque crochet latéral (17) étant configuré pour coopérer avec un rebord latéral (15) dudit secteur (7) de distributeur (4) de sorte que ledit crochet latéral (17) et ledit rebord latéral (15) correspondant soient en appui radial l'un sur l'autre et situés radialement de part et d'autre de ladite ligne directrice (L).

6. Secteur (11) de support (12) selon la revendication 5, **caractérisé en ce que** chaque crochet latéral (17) est décalé circonférentiellement dudit crochet central (16) d'une distance (E) prédéterminée qui est de préférence inférieure à 0.5 mm.

7. Secteur (11) de support (12) selon l'une des revendications 5 à 6, **caractérisé en ce que** la ligne directrice (L) est rectiligne ou curviligne.

8. Secteur (11) de support (12) selon l'une des revendications 5 à 7, **caractérisé en ce que** chacun desdits crochets (16, 17) a une section rectangulaire.

9. Distributeur (4) annulaire sectorisé d'une turbine (1) de turbomachine (2) comprenant une pluralité de secteurs (7) de distributeur (4) selon l'une des revendications 1 à 4, lesdits secteurs (7) de distributeur (4) étant disposés circonférentiellement bout à bout.

10. Support (12) annulaire sectorisé de distributeur (4) d'une turbine (1) de turbomachine (2) comprenant une pluralité de secteurs (11) de support (12) selon l'une des revendications 5 à 8, lesdits secteurs (11) de support (12) étant disposés circonférentiellement bout à bout.

11. Ensemble d'une turbine (1) de turbomachine (2) comprenant un secteur (7) de distributeur (4) selon l'une des revendications 1 à 4 et un secteur (11) de support (12) selon l'une des revendications 5 à 8, le rebord central (14) coopérant avec le crochet central (16), le rebord central (14) et le crochet central (16) étant en appui radial l'un sur l'autre et situés radialement de part et d'autre d'une ligne directrice (L) commune, chaque rebord latéral (15) coopérant avec un crochet latéral (17) correspondant, le rebord latéral (15) et le crochet latéral (17) correspondant étant en appui radial l'un sur l'autre et situés radialement de part et d'autre de la ligne directrice (L) commune.

12. Turbine (1) de turbomachine (2) comprenant un ensemble selon la revendication 11.

13. Turbomachine (2) comprenant une turbine (1) selon la revendication 12.

## Patentansprüche

1. Ringförmiger segmentierter Sektor (7) eines Verteilers (4) aus Verbundmaterial mit Keramikmatrix für eine Turbine (1) einer Turbomaschine (2), wobei der Sektor (7) eines Verteilers (4) eine externe Plattform (8) und eine interne Plattform (9), die zu der externen Plattform (8) koaxial ist, umfasst, wobei die externe Plattform (8) mit der internen Plattform (9) über mindestens eine Gleichrichterschaufel (5) verbunden ist, die sich entlang einer radialen Richtung erstreckt, wobei die externe Plattform (8) Kopplungsmittel (10) an einem Sektor (11) eines metallischen segmentierten ringförmigen Trägers (12) umfasst, **dadurch gekennzeichnet, dass** die Kopplungsmittel (10) mindestens einen zentralen Rand (14) und zwei seitliche Ränder (15) umfassen, die umfänglich zu beiden Seiten des zentralen Randes (14) liegen, wobei sich die Ränder (14, 15) entlang einer axialen Richtung senkrecht zu der radialen Richtung erstrecken, wobei der zentrale Rand (14) radial in Bezug auf die seitlichen Ränder (15) entlang einer Leitlinie (L), die mit einer Fläche jedes der Ränder (14, 15) zusammenfallend ist, derart versetzt ist, dass der zentrale Rand (14) radial auf einer Seite der Leitlinie (L) liegt, und die seitlichen Ränder (15) auf der anderen, wobei der zentrale Rand (14) konfiguriert ist, um mit einem zentralen Haken (16) des Sektors (11) des Trägers (12) derart zusammenzuwirken, dass der zentrale Rand (14) und der zentrale Haken (16) in radialer Auflage aufeinander sind und radial zu beiden Seiten der Leitlinie (L) liegen, wobei jeder seitliche Rand (15) konfiguriert ist, um mit einem seitlichen Haken (17) des Sektors (11) des Trägers (12) derart zusammenzuwirken, dass der seitliche Rand (15) und der entsprechende seitliche Haken (17) in radialer Auflage aufeinander sind und radial zu beiden Seiten der Leitlinie (L) liegen.

2. Sektor (7) eines Verteilers (4) nach Anspruch 1, **dadurch gekennzeichnet, dass** jeder seitliche Rand (15) umfänglich von dem zentralen Rand (14) um eine vorbestimmte Distanz (E), die vorzugsweise kleiner ist als 0,5 mm, versetzt ist.

3. Sektor (7) eines Verteilers (4) nach einem der vorstehenden Ansprüche, **dadurch gekennzeichnet, dass** die Leitlinie (L) geradlinig oder gekrümmt ist.

4. Sektor (7) eines Verteilers (4) nach einem der vorstehenden Ansprüche, **dadurch gekennzeichnet, dass** jeder der Ränder (14, 15) einen Rechteckquerschnitt aufweist.

5. Ringförmiger segmentierter Sektor (11) eines Trägers (12) eines Verteilers (4) einer Turbine (1) einer Turbomaschine (2), wobei der Sektor (11) eines Trägers (12) metallisch ist und einen Außenmantel (18) umfasst, der Aufnahmemittel (19) eines Sektors (7) aus Verbundmaterial mit Keramikmatrix eines Verteilers (4) nach einem der Ansprüche 1 bis 4 umfasst, **dadurch gekennzeichnet, dass** die Aufnahmemittel (19) mindestens einen zentralen Haken (16) und zwei seitliche Haken (17) umfassen, die umfänglich zu beiden Seiten des zentralen Hakens (16) liegen, wobei sich die Haken (16, 17) entlang einer axialen Richtung erstrecken, wobei der zentrale Haken (16) radial in Bezug auf die seitlichen Haken (17) entlang einer Leitlinie (L), die mit einer Fläche jedes der Haken (16, 17) zusammenfallend ist, derart versetzt ist, dass der zentrale Haken (16) radial auf einer Seite der Leitlinie (L) liegt, und die seitlichen Haken (17) auf der anderen, wobei der zentrale Haken (16) konfiguriert ist, um mit einem zentralen Rand (14) des Sektors (7) eines Verteilers (4) derart zusammenzuwirken, dass der zentrale Haken (16) und der zentrale Rand (14) in radialer Auflage aufeinander sind und radial zu beiden Seiten der Leitlinie (L) liegen, wobei jeder seitliche Haken (17) konfiguriert ist, um mit einem seitlichen Rand (15) des Sektors (7) eines Verteilers (4) derart zusammenzuwirken, dass der seitliche Haken (17) und der entsprechende seitliche Rand (15) in radialer Auflage aufeinander sind und radial zu beiden Seiten der Leitlinie (L) liegen.

6. Sektor (11) eines Trägers (12) nach Anspruch 5, **dadurch gekennzeichnet, dass** jeder seitliche Haken (17) umfänglich von dem zentralen Rand (16) um eine vorbestimmte Distanz (E), die vorzugsweise kleiner ist als 0,5 mm, versetzt ist.

7. Sektor (11) eines Trägers (12) nach einem der Ansprüche 5 bis 6, **dadurch gekennzeichnet, dass** die Leitlinie (L) geradlinig oder gekrümmt ist.

8. Sektor (11) eines Trägers (12) nach einem der Ansprüche 5 bis 7, **dadurch gekennzeichnet, dass** jeder der Haken (16, 17) einen Rechteckquerschnitt aufweist.

9. Segmentierter ringförmiger Verteiler (4) einer Turbine (1) einer Turbomaschine (2), der eine Vielzahl von Sektoren (7) eines Verteilers (4) nach einem der Ansprüche 1 bis 4 umfasst, wobei die Sektoren (7) eines Verteilers (4) in Umfangsrichtung Ende an Ende angeordnet sind.

10. Ringförmiger segmentierter Träger (12) eines Verteilers (4) einer Turbine (1) eine Turbomaschine (2), der eine Vielzahl von Sektoren (11) eines Trägers (12) nach einem der Ansprüche 5 bis 8 umfasst, wobei die Sektoren (11) eines Trägers (12) in Umfangsrichtung Ende an Ende angeordnet sind.

11. Anordnung einer Turbine (1) einer Turbomaschine (2), die einen Sektor (7) eines Verteilers (4) nach einem der Ansprüche 1 bis 4 und einen Sektor (11) eines Trägers (12) nach einem der Ansprüche 5 bis 8 umfasst, wobei der zentrale Rand (14) mit dem zentralen Haken (16) zusammenwirkt, wobei der zentrale Rand (14) und der zentrale Haken (16) in radialer Auflage aufeinander sind und zu beiden Seiten einer gemeinsamen Leitlinie (L) liegen, wobei jeder seitliche Rand (15) mit einem entsprechenden seitlichen Haken (17) zusammenwirkt, wobei der seitliche Rand (15) und der entsprechende seitliche Haken (17) in radialer Auflage aufeinander sind und radial zu beiden Seiten der gemeinsamen Leitlinie (L) liegen.

12. Turbine (1) einer Turbomaschine (2), die eine Anordnung nach Anspruch 11 umfasst.

13. Turbomaschine (2), die eine Turbine (1) nach Anspruch 12 umfasst.

## Claims

1. A sector (7) of an annular sectorized turbine stator (4) made of ceramic matrix composite for a turbine (1) of a turbomachine (2), said sector (7) of the turbine stator (4) comprising an outer platform (8) and an inner platform (9) coaxial with said outer platform (8), said outer platform (8) being connected to said inner platform (9) via at least one fixed straightening vane (5) extending in a radial direction, said outer platform (8) comprising attachment means (10) for attaching to a sector (11) of an annular sectorized metallic support (12),
**characterised in that** the attachment means (10) comprise at least one central rim (14) and two lateral rims (15) located circumferentially on either side of the central rim (14), the rims (14, 15) extending in an axial direction perpendicular to the radial direction, said central rim (14) being radially offset with respect to said lateral rims (15) along a guiding line (L) coinciding with a face of each of said rims (14, 15) such that the central rim (14) is radially on one side of said guiding line (L) and the lateral rims (15) on the other, said central rim (14) being configured to cooperate with a central hook (16) of said sector (11) of the support (12) so that said central rim (14) and said central hook (16) are bearing radially against one another and are located radially on either side of said guiding line (L), each lateral rim (15) being configured to cooperate with a lateral hook (17) of said sector (11) of the support (12) so that said lateral rim (15) and said corresponding lateral hook (17) are bearing radially against one another and are located radially on either side of said guiding line (L).

2. The sector (7) of the turbine stator (4) according to claim 1, **characterised in that** each lateral rim (15) is circumferentially offset from said central rim (14) by a predetermined distance (E) which is preferably less than 0.5 mm.

3. The sector (7) of the turbine stator (4) according to any one of the preceding claims, **characterized in that** the guiding line (L) is rectilinear or curvilinear.

4. The sector (7) of the turbine stator (4) according to any one of the preceding claims, **characterized in that** each of said rims (14, 15) has a rectangular cross-section.

5. A sector (11) of an annular sectorized support (12) for a turbine stator (4) of a turbine (1) of a turbomachine (2), said sector (11) of the support (12) being metallic and comprising an outer shell (18) comprising reception means (19) for receiving a ceramic matrix composite sector (7) of a turbine stator (4) according to any one of the claims 1 to 4, **characterised in that** the reception means (19) comprise at least one central hook (16) and two lateral hooks (17) located circumferentially on either side of the central hook (16), the hooks (16,17) extending in an axial direction, said central hook (16) being radially offset with respect to said lateral hooks (17) along a guiding line (L) coinciding with one face of each of said hooks (16, 17) so that the central hook (16) is radially on one side of said guiding line (L) and the lateral hooks (17) on the other, said central hook (16) being configured to cooperate with a central rim (14) of said sector (7) of the turbine stator (4) so that said central hook (16) and said central rim (14) are bearing radially against one another and are located radially on either side of said guiding line (L), each lateral hook (17) being configured to cooperate with a lateral rim (15) of said sector (7) of the turbine stator (4) so that said lateral hook (17) and said corresponding lateral rim (15) are bearing radially against one another and are located radially on either side of said guiding line (L).

6. The sector (11) of the support (12) according to claim 5, **characterised in that** each lateral hook (17) is circumferentially offset from said central hook (16) by a predetermined distance (E) which is preferably less than 0.5 mm.

7. The sector (11) of the support (12) according to any one of claims 5 to 6, **characterized in that** the guiding line (L) is rectilinear or curvilinear.

8. The sector (11) of the support (12) according to any one of claims 5 to 7, **characterized in that** each of said hooks (16, 17) has a rectangular cross-section.

9. An annular sectorized turbine stator (4) of a turbine (1) of a turbomachine (2) comprising a plurality of sectors (7) of the turbine stator (4) according to any one of claims 1 to 4, said sectors (7) of the turbine stator (4) being arranged circumferentially end to end.

10. An annular sectorized support (12) for a turbine stator (4) of a turbine (1) of a turbomachine (2) comprising a plurality of sectors (11) of the support (12) according to any one of claims 5 to 8, said sectors (11) of the support (12) being arranged circumferentially end to end.

11. An assembly of a turbine (1) of a turbomachine (2) comprising a sector (7) of the turbine stator (4) according to any one of claims 1 to 4 and a sector (11) of the support (12) according to any one of claims 5 to 8, the central rim (14) cooperating with the central hook (16), the central rim (14) and the central hook (16) bearing radially against one another and being located radially on either side of a common guiding line (L), each lateral rim (15) cooperating with a corresponding lateral hook (17), the lateral rim (15) and the corresponding lateral hook (17) bearing radially against one another and being located radially on either side of the common guiding line (L).

12. A turbine (1) of a turbomachine (2) comprising an assembly according to claim 11.

13. A turbomachine (2) comprising a turbine (1) according to claim 12.
